## Europäisches Patentamt

## European Patent Office

## Office européen des brevets

(11) Numéro de publication: **0 142 403**
**B1**

# (12) FASCICULE DE BREVET EUROPÉEN

(45) Date de publication du fascicule du brevet:
22.07.87

(51) Int. Cl.⁴: **F 16 D 3/34,** F 16 D 3/20

(21) Numéro de dépôt: 84401949.7

(22) Date de dépôt: 28.09.84

(54) Dispositif d'accouplement homocinetique entre un premier arbre et un deuxieme arbre rotatifs.

(30) Priorité: 04.10.83 FR 8315951

(43) Date de publication de la demande:
22.05.85 Bulletin 85/21

(45) Mention de la délivrance du brevet:
22.07.87 Bulletin 87/30

(84) Etats contractants désignés:
AT BE DE FR GB IT NL SE

(56) Documents cité:
BE-A-402 261
DE-A-2 264 450
FR-A-993 818
FR-A-1 339 994
FR-A-1 372 843
FR-A-2 184 701
GB-A-2 073 369
US-A-2 342 625
US-A-2 354 961

(73) Titulaire: Labbé, Roland, 8 rue Raoul Dufy Les Résidences de l'Orchidée, F-44470 Sainte Luce sur Loire (FR)

(72) Inventeur: Labbé, Roland, 8 rue Raoul Dufy Les Résidences de l'Orchidée, F-44470 Sainte Luce sur Loire (FR)

(74) Mandataire: Gosse, Michel, SOSPI 14- 16, rue de la Baume, F-75008 Paris (FR)

LIBER, STOCKHOLM 1987

## Description

La présente invention concerne un dispositif d'accouplement homocinétique entre un premier arbre et un deuxième arbre rotatifs, du type joint tripode à point unique d'inflexion, comprenant un élément de transmission constitué par un assemblage de trois organes oscillants articulés autour d'un axe commun, une première tulipe d'entraînement solidaire de l'extrémité du premier arbre, une deuxième tulipe d'entraînement solidaire de l'extrémité du deuxième arbre, chaque tulipe d'entraînement étant munie de trois organes d'entraînement possédant chacun un axe de symétrie fixe par rapport à sa tulipe d'entraînement, l'axe de symétrie des six organes d'entraînement étant concourant sur ledit axe commun des trois organes oscillants, les axes de symétrie des organes d'entraînement de la première tulipe faisant un angle $\beta$ avec l'axe du premier arbre et les axes de symétrie des organes d'entraînement de la deuxième tulipe faisant un angle $\alpha$ avec l'axe du deuxième arbre, les traces desdits axes de symétrie des organes d'entraînement d'une tulipe sur un plan perpendiculaire à l'axe de l'arbre lié à ladite tulipe formant les sommets d'un triangle sensiblement équilatéral, chacun des trois organes oscillants comportant des moyens de guidage coopérant avec un couple d'organes d'entraînement dont l'un appartient à la première tulipe et l'autre à la deuxième tulipe de manière à, d'une part interdire la désolidarisation d'une tulipe par rapport audit élément de transmission et d'autre part à permettre à chaque organe d'entraînement de se déplacer, par rapport à l'organe oscillant avec lequel il coopère, sur une portion de trajectoire circulaire dont le plan médian contient ledit axe commun et ledit axe de symétrie dudit organe d'entraînement considéré et dont le centre est confondu avec ledit point concourant desdits axes de symétrie des organes d'entraînement.

On parle d'un dispositif homocinétique du type à point d'inflexion unique par opposition, par exemple, à un dispositif à deux joints de cardan qui impose deux points d'inflexion plus ou moins rapprochés à la ligne d'arbre qu'il relie.

Le document FR-A-2 184 701 décrit, en relation avec les figures 5 et 6, un dispositif d'accouplement homocinétique à point d'inflexion unique tel que défini ci-dessus. Dans ce document, l'élément de transmission est constitué par l'assemblage, en charnière, de trois plaques semi-circulaires.

La tranche de chaque plaque comporte une gorge de guidage desdits organes d'entraînement. Cette gorge est de section trapézoïdale dont la grande base est la plus proche de la charnière. Les deux tulipes d'entraînement sont constituées chacune par une calotte sphérique portant les trois organes d'entraînement constitués chacun par un rouleau conique dont l'axe fait un angle aigu $\alpha$ avec l'axe de l'arbre porteur de la tulipe considérée. L'angle d'inclinaison des axes des rouleaux coniques est le même pour les deux tulipes, on a donc $\alpha = \beta$. En position alignée des arbres, les trois plaques semi-circulaires sont respectivement à 120° les unes des autres. Chaque plaque semi-circulaire reçoit ainsi deux rouleaux coniques, l'un d'une tulipe et l'autre de l'autre tulipe.

On comprend aisément qu'avec un tel dispositif il est rigoureusement impossible d'infléchir les arbres de telle manière qu'ils fassent entre eux un angle de 90°. En effet, chaque rouleau n'a une course théorique possible que de 90° en lui donnant un diamètre nul, ce qui n'est qu'une vue de l'esprit. En pratique, on ne peut certainement pas descendre au-dessous de 120° à 130° compte tenu du diamètre nécessaire des rouleaux qui ne peuvent évidemment pas franchir l'axe de la charnière des trois plaques.

Par ailleurs, un tel dispositif n'est mécaniquement équilibré que lorsque les trois plaques sont à 120° les unes des autres, ce qui n'est le cas que dans la position alignée des arbres. Ceci exclut l'utilisation d'un tel dispositif pour des grandes vitesses de rotation des arbres.

La présente invention a pour but principal de proposer un dispositif d'accouplement homocinétique permettant une très grande inflexion angulaire des arbres rotatifs à accoupler, l'angle entre les arbres pouvant descendre jusqu'à au moins 90° et même un peu moins.

Par ailleurs, le dispositif selon l'invention est mécaniquement équilibré quel que soit l'angle d'inclinaison des arbres entre eux.

D'autres caractéristiques secondaires lui permettent de fonctionner à très grande vitesse de rotation des arbres.

Selon l'invention, le dispositif d'accouplement homocinétique tel que défini plus haut est caractérisé en ce que, pour chaque dit organe oscillant, lesdits moyens de guidage sur une trajectoire circulaire des organes d'entraînement existent, au moins sur une certaine étendue, de part et d'autre dudit axe commun d'articulation, en ce que chaque couple d'organes d'entraînement qui coopère avec son organe oscillant propre est situé de telle façon que les deux organes d'entraînement qui le composent sont situés de part et d'autre dudit axe commun d'articulation, en ce que chaque tulipe comporte trois bras d'entraînement permettant aux deux tulipes de s'interpénétrer sans interférence au cours de la rotation des arbres même lorsque les axes des arbres forment un angle, un dit organe d'entraînement étant placé au voisinage de l'extrémité de chaque bras, et en ce que lesdits angles $\alpha$ et $\beta$ sont supplémentaires.

Selon une première réalisation, les angles $\alpha$ et $\beta$ sont différents.

Avantageusement, la valeur absolue de la demi-différence entre les angles $\alpha$ et $\beta$, appelée $\gamma$, est faible et de l'ordre de quelques degrés. Cette disposition, $\alpha$ différent de $\beta$ a pour but que l'élément de transmission ne puisse pas bouger en position alignée des arbres.

Selon une autre réalisation, $\alpha = \beta = 90°$, on prévoit alors, si les arbres risquent de passer par la position alignée, des moyens pour qu'en cette position alignée des arbres, l'axe commun d'articulation soit maintenu dans l'alignement des arbres.

Selon une réalisation, ces moyens comprennent, pour au moins deux organes d'entraînement non associés au même organe oscillant, un système à bille rétractable inséré dans un alésage dudit organe, la bille roulant sur lesdits moyens de guidage de l'organe oscillant considéré, dans ledit plan médian de ladite trajectoire, qui comportent une empreinte à leur intersection avec le plan perpendiculaire audit axe commun d'articulation passant par ledit point concourant.

Selon une première réalisation, lesdits organes d'entraînement sont constitués par des tétons sphériques et lesdits moyens de guidage desdits organes comportent, pour chaque organe oscillant, une gorge périphérique circulaire dont la section est circulaire et non fermée, l'ouverture étant inférieure à 180°.

Avantageusement, chaque téton sphérique est monté, à l'extrémité d'un dit bras, de façon à pouvoir pivoter autour dudit axe de symétrie.

Selon une autre réalisation, particulièrement intéressante à grande vitesse de rotation des arbres, un dit organe de guidage est constitué par une collerette circulaire périphérique dont la section est un trapèze isocèle à petite base la plus éloignée dudit axe commun d'articulation et un dit organe d'entraînement comporte un chariot à quatre galets coniques enserrant deux à deux ladite collerette, les axes des deux galets situés d'un même côté de la collerette convergeant sur un axe passant par ledit point concourant desdits axes de symétrie et perpendiculaire audit axe commun et audit axe de symétrie de l'organe d'entraînement considéré, ledit chariot étant monté, à l'extrémité d'un bras, de façon à pouvoir pivoter autour dudit axe de symétrie.

Avantageusement, le diamètre moyen des trajectoires des organes d'entraînement est le même pour les trois organes oscillants.

Selon une autre caractéristique de l'invention, et afin de soulager le dispositif des éventuelles charges axiales, il comporte en outre un système articulé de deux paliers à fourches dans chacun desquels est intégré coaxialement l'une des tulipes de telle sorte que l'axe d'articulation dudit systéme passe par ledit point de concours desdits axes de symétrie desdits organes d'entraînement, chacun desdits paliers à fourches comportant un moyeu maintenu prisonnier axialement entre une contre-butée et un épaulement solidaires de leur tulipe respective, ledit dispositif pouvant tourner librement dans ledit système de paliers à fourches.

Avantageusement, ledit système articulé de deux paliers à fourches comporte des moyens de verrouillage de la position angulaire respective des axes de leur moyeu.

On va maintenant décrire un exemple de réalisation de l'invention en se référant au dessin annexé. Cependant, avant d'énumérer les figures et de commencer la description, on fera remarquer que dans la suite de la description, pour des raisons de commodités, on appellera l'élément de transmission: rotule de transfert ou rotule et chaque organe oscillant de cette rotule sera appelé: disque méridien. De même l'axe commun d'articulation sera appelé axe polaire.

En outre dans l'exemple particulier de la description qui suit, le diamètre moyen des trajectoires des organes d'entaînement est le même pour les trois disques méridiens, ce qui signifie que les trois disques ont le même diamètre. Ceci est évidemment le cas le plus pratique, bien que non indispensable.

Par ailleurs, la trace des axes de symétrie des organes d'entraînement d'une tulipe sur un plan perpendiculaire à l'axe de l'arbre lié à ladite tulipe forme exactement un triangle équilatéral ce qui est aussi le plus intéressant, bien qu'un léger écart soit possible. Ceci, en combinaison avec le fait que les disques méridiens ont le même diamètre entraîne que pour chaque tulipe, les trois bras d'entraînement sont à 120° les uns des autres, les trois organes d'entraînement étant dans un plan perpendiculaire à l'axe de l'arbre et que, dans ce plan, ils forment les sommets d'un triangle équilatéral.

Ainsi, la description qui suit se limitera à ce cas particulier, particulièrement intéressant.

Les figures 1 à 10 représentent deux à deux, respectivement 1 et 2, 3 et 4, 5 et 6, 7 et 8, 9 et 10, des schémas d'épures descriptives en projections orthogonales des deux tulipes d'entraînement du dispositif selon l'invention, sans la rotule, dans des phases successives de rotation des arbres, considérés avec une inclinaison relative de 90° de leurs axes.

La figure 11 montre le dispositif selon l'invention en position d'alignement des arbres, en coupe axiale selon XI-XI de la figure 12.

La figure 12 est une vue en coupe selon XII-XII de la figure 11.

La figure 13 montre la rotule seule, vue dans le même sens que sur la figure 12 mais dans une position relative de ses disques méridiens correspondant à une position perpendiculaire des axes des arbres rotatifs et à la phase représentée figures 3 et 4 ou 9 et 10.

Les figures 14 à 19 représentent séparément les trois disques méridiers de la rotule.

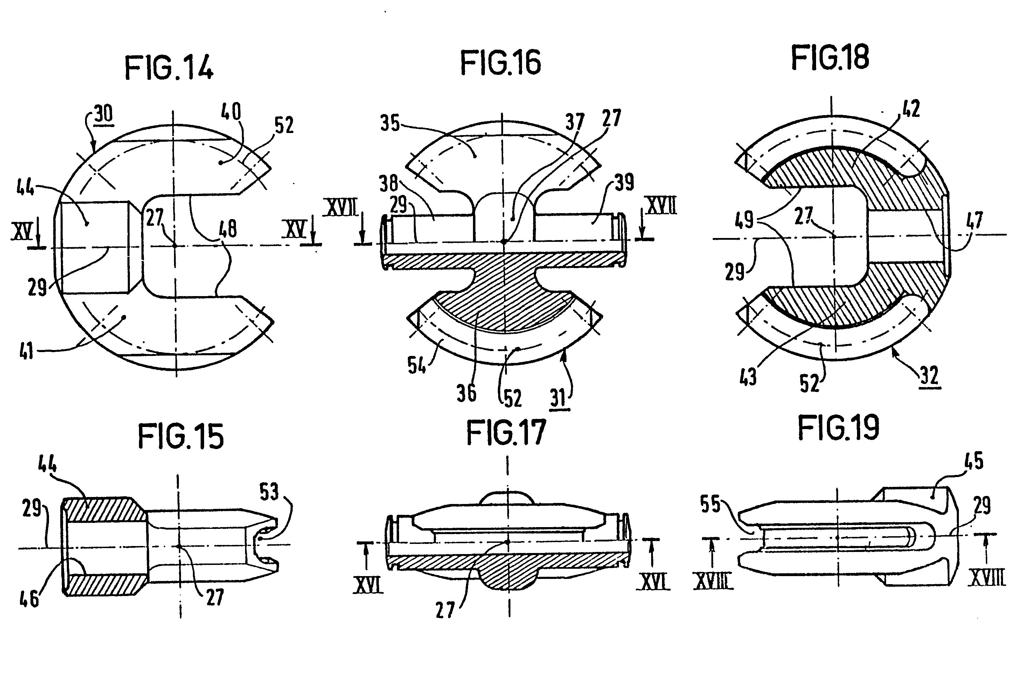

La figure 14 montre le premier disque méridien.

La figure 15 est une vue en coupe selon XV-XV de la figure 14.

La figure 16 montre le deuxieme disque mériden en demi-coupe selon XVI-XVI de la figure 17.

La figure 17 est une demi-coupe selon XVII-XVII de la figure 16.

La figure 18 montre le troisième disque méridien en coupe selon XVIII-XVIII de la figure 19.

La figure 19 est une vue de dessus du troisième disque méridien de la figure 18.

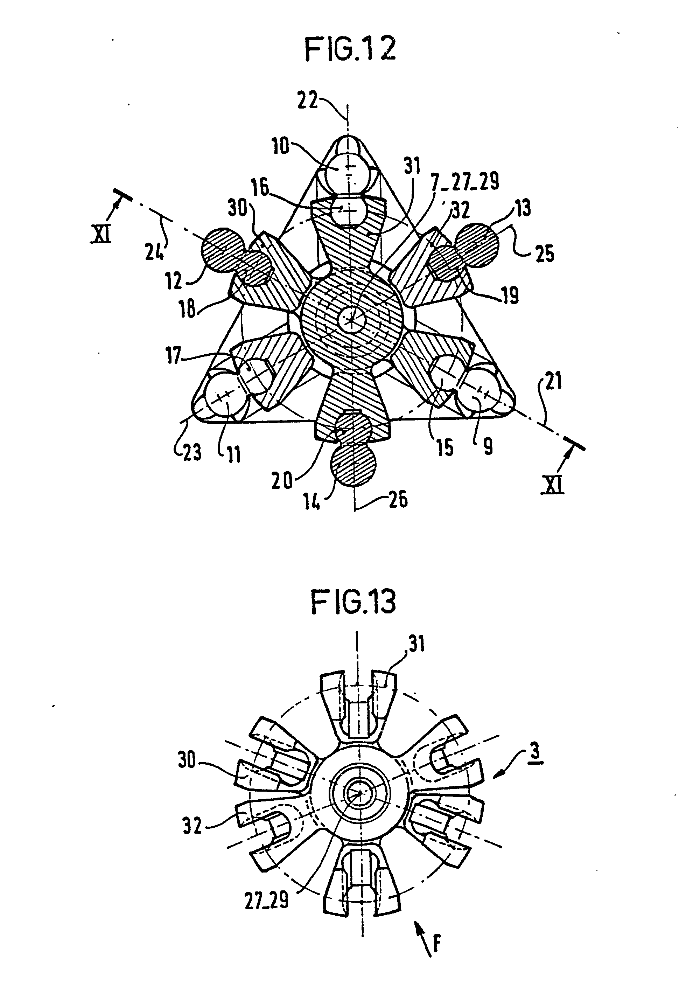

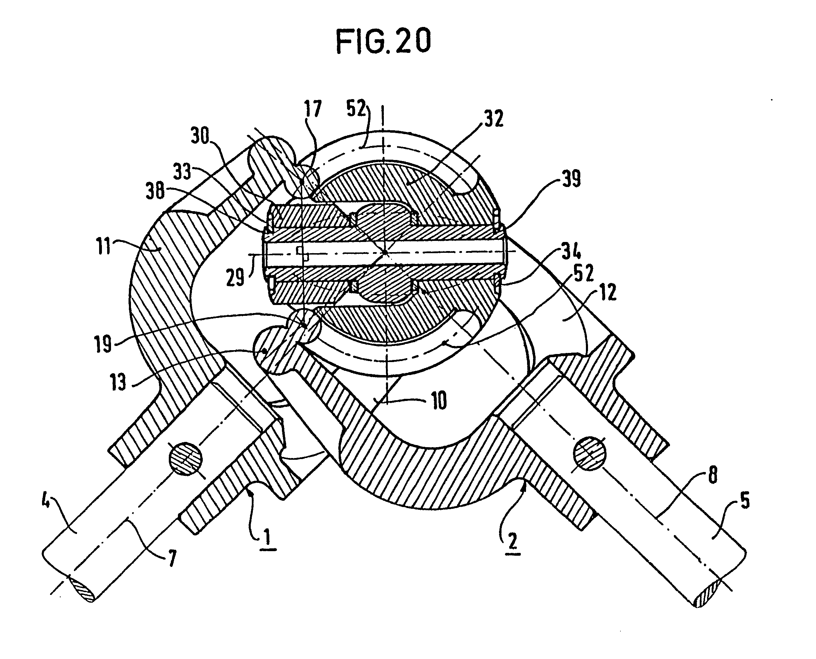

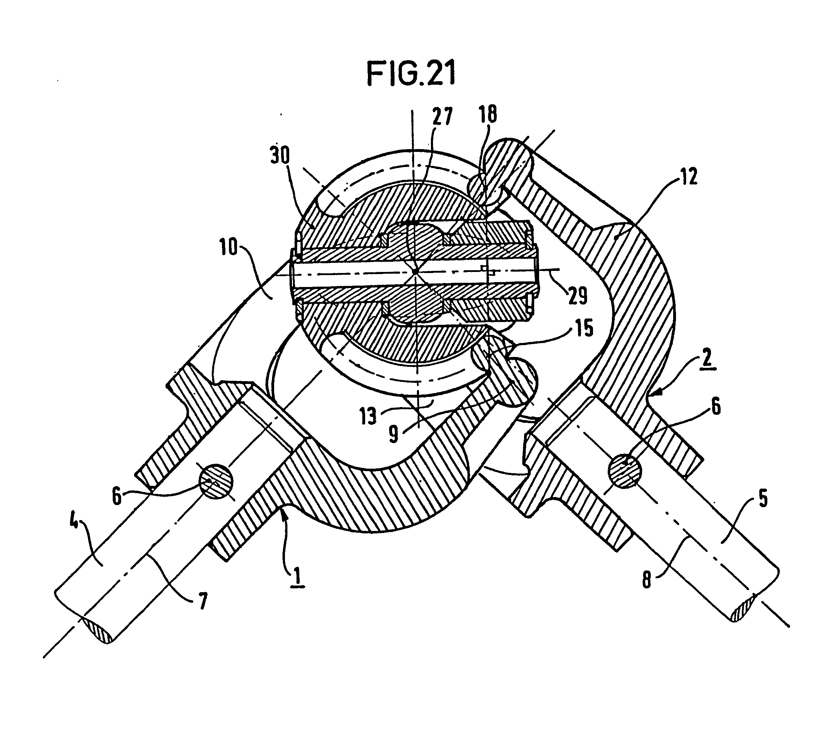

Les figures 20 et 21 montrent respectivement, en coupe axiale, dans une position où les arbres sont inclinés à 90°, le dispositif selon deux positions angulaires de rotation des arbres correspondant à 60° de rotation; la figure 20 étant vue en regardant la figure 13 dans le sens de la flèche F et la figure 21 découlant de la figure 20 par une rotation des arbres de 60° dans le sens inverse des aiguilles d'une montre en regardant la figure 13.

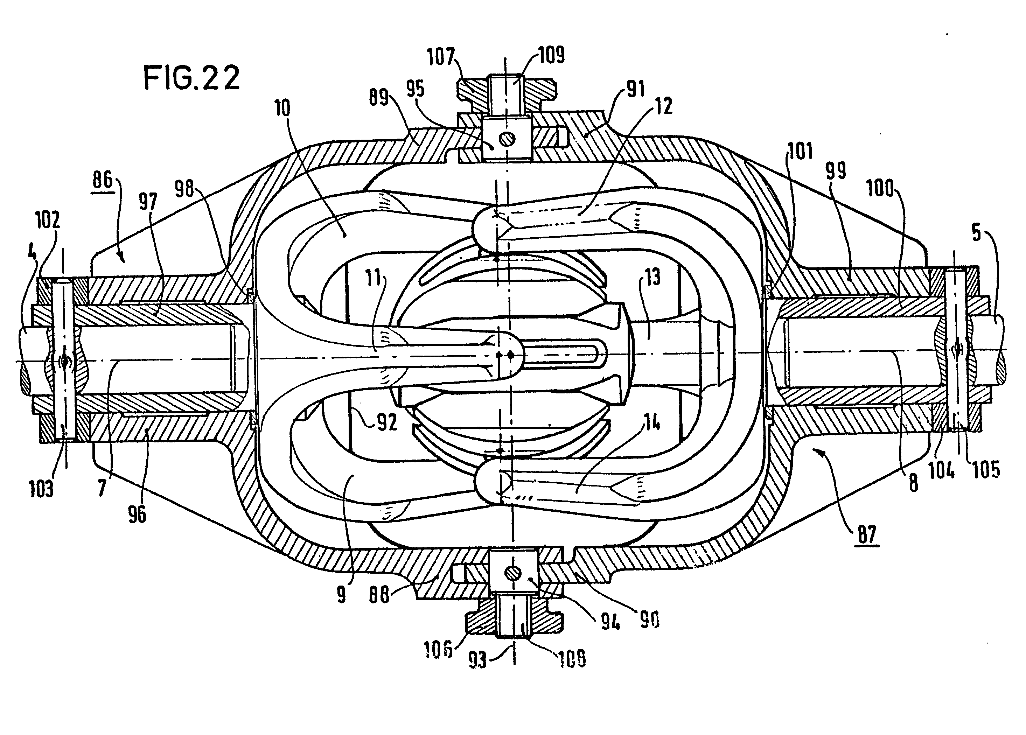

La figure 22 montre, en position alignée des arbres, le dispositif, associé avec un système articulé de deux paliers à fourches.

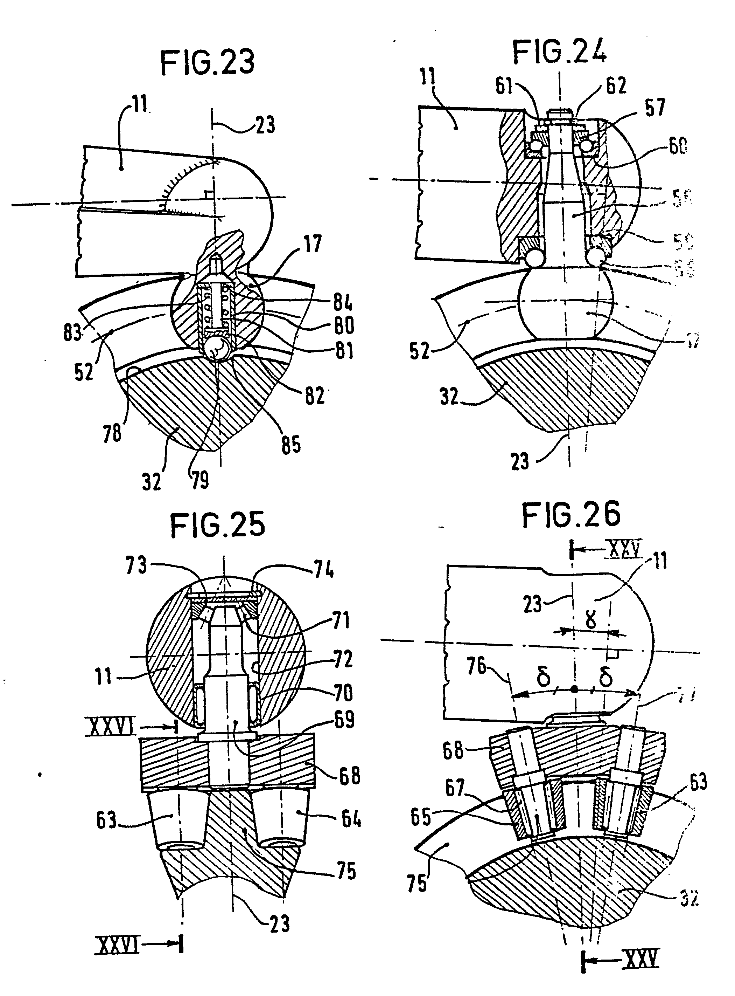

La figure 23 est une vue partielle en coupe par le plan périphérique médian d'un disque méridien, montrant un organe d'entraînement comportant un moyen de retenue de l'axe polaire de la rotule de transfert dans la position d'alignement des arbres lorsque ceux-ci sont alignés.

La figure 24 montre également un détail montrant une réalisation particulière d'un organe d'entraînement.

Les figures 25 et 26 sont également des vues partielles représentant une autre réalisation particulière d'un organe d'entraînement.

La figure 25 est une coupe selon XXV-XXV de la figure 26 en position alignée des arbres.

La figure 26 est une coupe selon XXVI-XXVI de la figure 25.

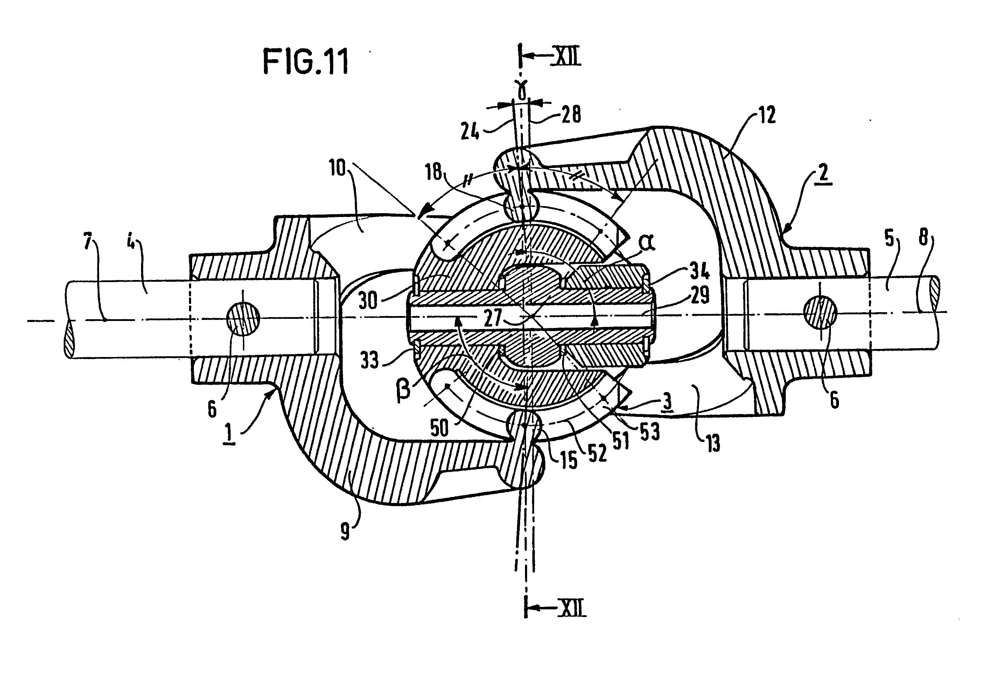

En se référant aux figures 11 et 12, le dispositif d'accouplement homocinétique selon l'invention comprend essentiellement trois parties: une première tulipe d'entraînement 1, une deuxième tulipe d'entraînement 2 et une rotule de transfert 3. Les arbres à accoupler sont repérés 4 et 5. L'arbre 4 est lié à la première tulipe 1, et l'arbre 5 est lié à la deuxième tulipe 2. Des goupilles 6 assurent cette liaison.

Dans ces figures 11 et 12, les axes 7 et 8 des arbres 4 et 5 sont alignés.

Chaque tulipe d'entraînement comporte trois bras d'entraînement 9, 10 et 11 pour la première tulipe 1 et 12, 13 et 14 pour la deuxième tulipe 2: voir figures 11, 12, 20, 21 et 22. Les bras sont respectivement à 120° les uns des autres. Chaque bras d'entraînement comporte à son extrémité un organe d'entraînement 15, 16 et 17 pour la tulipe 1 et 18, 19 et 20 pour la seconde tulipe 2.

Les organes d'entraînement possedent un axe de symétrie respectivement 21 à 26 qui sont tous concourants au centre 27 de la rotule 3. Les axes de symétrie 21, 22, 23 des organes d'entraînement 15, 16 et 17 de la première tulipe 1 font chacun un angle $\beta$ avec l'axe 7 du premier arbre 4 et les axes de symétrie 24, 25 et 26 des organes d'entraînement 18, 19 et 20 de la seconde tulipe 2 font chacun un angle $\alpha$ avec l'axe 8 de l'arbre 5 lié à la deuxième tulipe 2. Les angles $\alpha$ et $\beta$ sont supplémentaires. Dans l'exemple décrit, $\alpha$ est différent de $\beta$. La demi différence des angles $\alpha$ et $\beta$ est représentée par $\gamma$

sur la figure 11 et elle correspond au dépassement angulaire des axes de symétrie 24, 25 et 26 par rapport au plan 28 perpendiculaire aux axes 7 et 8 des arbres en position alignée et passant par le centre 27 de la rotule dont l'axe polaire 29 est également aligné avec les axes 7 et 8.

Si $\alpha$ est égal à $\beta$, $\gamma$ est alors nul. Dans ce dernier cas, il faut envisager, si la ligne d'arbres est susceptible de passer par la position alignée, un moyen pour faire en sorte que, dans cette position, la rotule ne puisse pas pivoter, car si cela se produisait, la ligne d'arbres ne pourrait plus se désaligner. Un tel moyen est représenté sur la figure 23 et sera décrit plus loin.

Cependant, dans l'exemple décrit, un tel moyen n'est pas nécessaire car $\alpha$ est différent de $\beta$ et il en résulte qu'en position alignée des arbres, la rotule a une position bien définie non modifiable.

Bien entendu, le fait que l'angle $\gamma$ ne soit pas nul implique une non identité parfaite des tulipes 1 et 2. En effet, on peut aisément constater sur les figures 11 et 22 que les bras 12, 13 et 14 de la seconde tulipe 2 sont légèrement plus long que les bras 9, 10, 11 de la première tulipe 1.

Bien entendu, si on désire des tulipes parfaitement identiques, il suffit de faire $\gamma = 0$ et d'utiliser le dispositif représenté figure 23 si la ligne d'arbres doit, à un moment ou à un autre, passer à l'alignement parfait.

La rotule 3 est composée par l'assemblage de trois disques méridiens oscillants 30, 31 et 32 autour de leur axe commun d'assemblage ou axe polaire 29. Les trois disques ont un centre commun 27 centre de la rotule. Afin que les disques ne se décalent pas axialement les uns par rapport aux autres et qu'ils restent bien homocentriques, ils sont maintenus au moyen de circlips 33 et 34.

Chacun de ces trois disques méridiens sont représentés en détail séparément sur les figures 14 à 19.

Les figures 14 et 15 montrent le disque 30, les figures 16 et 17 le disque 31 et les figures 18 et 19 le disque 32.

Le disque méridien central 31 est symétrique par rapport au centre 27 de la rotule.

Il comprend deux secteurs circulaires 35 et 36 respectivement situés de part et d'autre de l'axe polaire 29 et montés sur un moyeu central 37 qui se prolonge de part et d'autre par des tourillons 38 et 39.

Les disques 30 et 32 sont identiques entre eux et ont la forme générale d'un croissant composé de deux secteurs circulaires 40 et 41 pour le disque 30, 42 et 43 pour le disque 32, reliés entre eux par un moyeu excentré, respectivement 44 et 45. Ces disques ont un axe de symétrie 29 qui est l'axe polaire ou d'articulation de la rotule.

Par le trou, respectivement 46 et 47, de leur moyeu, ces disques sont respectivement montés sur les tourillons 38 et 39 du disque méridien central: En position montée, le disque 30, par son échancrure centrale 48 enveloppe le moyeu 37 du disque méridien central 31 et au moins en partie le moyeu 45 du disque méridien 32 et de la même manière, le disque 32, par son échancrure centrale 49, enveloppe le moyeu 37 du disque méridien 31 et au moins en partie le moyeu 44 du disque méridien 30.

Des rondelles 50 et 51, voir figure 11, permettent de centrer parfaitement les trois disques respectivement, ils sont ensuite axialement maintenus par les circlips 33 et 34 comme on l'a vu plus haut.

Une fois assemblés, les trois disques peuvent osciller les uns par rapport aux autres autour de l'axe charnière ou polaire 29. Enfin, chacun des disques possède un moyen de guidage pour guider et maintenir un couple d'organe d'entraînement parmi les organes d'entraînement 15 à 20 ci-dessus.

Pour chaque disque, il s'agit d'une piste circulaire de ligne moyenne repérée 52 située dans le plan contenant l'axe polaire 29. En l'occurrence, dans l'exemple décrit, cette piste est constituée par une gorge périphérique de section circulaire, comme on le voit bien sur la figure 12. Cette gorge est repérée 53 pour le disque 30 (voir figure 15) 54 pour le disque 31 (voir figure 16) et 55 pour le disque 32 (voir figure 19). Ces gorges sont de section circulaire pour recevoir les organes d'entraînement 15 à 20 qui en l'occurrence sont des tétons sphériques (voir figures 12, 11, 20, 21).

Afin que la rotule ne puisse pas se dégager des tétons sphériques, les gorges circulaires périphériques enveloppent les tétons sur plus d'une demi-circonférence. Pour chaque disque, la gorge périphérique circulaire de ligne médiane moyenne 52, couvre un secteur d'environ 110° de chaque côté de l'axe polaire 29. Compte tenu de la dimension minimale des organes d'entraînement, il faut prévoir, si l'on veut une inclinaison d'arbres d'au moins 90°, que ledit secteur de ladite gorge de guidage fasse au moins 100° de chaque côté de l'axe polaire.

Lorsque les tulipes 1 et 2 sont montées de part et d'autre de la rotule 3, chaque disque méridien est en prise avec deux tétons sphériques dont l'un appartient à la tulipe 1 et l'autre à la tulipe 2 et en outre l'un des tétons est situé dans la gorge périphérique circulaire d'un côté de l'axe polaire 29 et l'autre téton dans la gorge périphérique circulaire de l'autre côté de l'axe polaire.

Les tétons, ou organes d'entraînement, 15, 16, 17 appartiennent à la tulipe 1 et sont en prise respectivement avec les disques 30, 31 et 32 et les tétons 18, 19 et 20 appartiennent à la tulipe 2 et sont en prise respectivement avec les disques 30, 32 et 31.

Comme on l'a déjà vu, en position montée, les axes de symétrie 21 à 26 des organes d'entraînement (tétons sphériques) concourent tous au point central 27 de la rotule 3 et le plan de la ligne circulaire médiane 52, du moyen de guidage constitué par une gorge de section circulaire, est, pour chaque disque, contenue dans le plan contenant l'axe polaire 29 et les axes de symétrie des deux organes d'entraînement qui coopèrent avec le disque considéré.

Ainsi, en fonctionnement, les organes d'entraînement sont contraints de rester dans leur gorge respective, en se déplaçant le long de sa gorge si les axes 4 et 5 des arbres ne sont pas alignés. Pendant ce temps là, toujours si les axes des arbres ne sont pas alignés, les disques oscillent les uns par rapport aux autres. La rotation des arbres est parfaitement homocinétique.

La figure 20 permet de montrer le dispositif lorsque les arbres 4 et 5 sont dans une position perpendiculaire, et la figure 21 la même chose, mais après une rotation des arbres autour de leur axe, de 60° dans le sens inverse des aiguilles d'une montre en regardant ces deux figures du côté droit.

Comme on peut le constater sur ces deux figures, lorsque les axes 7 et 8 des arbres ne sont pas alignés, l'angle que fait l'axe 7 avec l'axe polaire 29 est égal à l'angle que fait l'axe 8 avec l'axe polaire 29.

Comme on peut le comprendre aisément en regardant la figure 22, qui sera décrite plus loin, on saisit immédiatement que le plan médian des bras d'entraînement, tel que le bras 11 par exemple reste toujours dans le plan médian de son disque méridien au cours de la rotation des arbres si ceux-ci sont parfaitement alignés, mais que cela n'est plus du tout le cas lorsque les axes des arbres ne sont plus alignés. Il est donc nécessaire que les organes d'entraînement puissent pivoter par rapport à leur bras, autour de leur axe de symétrie s'ils n'ont pas la possibilité de le faire dans leur chemin de guidage. Dans l'exemple décrit jusqu'ici, les organes d'entraînement sont sphériques et donc il n'est pas nécessaire qu'ils soient montés avec possibilité de pivotement autour de leur axe de symétrie.

Cependant, cela peut être bon de le faire pour diminuer les frottements. La figure 24 montre ainsi un tel montage où un organe d'entraînement est monté avec possibilité de pivoter autour de son axe de symétrie. Arbitrairement, on a représenté l'organe d'entraînement 17 guidé et agrippé au disque méridien 32. Le téton 17 possède une queue d'arbre 56 et il est monté à l'extrémité du bras d'entraînement 11 au moyen de roulements 57 et 58 montés contre des épaulements 59 et 60. L'ensemble est maintenu serré par une cale 61 et un circlip 62.

Les figures 25 et 26 montrent un autre exemple de réalisation d'un organe d'entraînement pour lequel il est là nécessaire que l'ensemble de l'organe d'entraînement puisse pivoter autour de son axe de symétrie.

Là, l'organe d'entraînement 17 est constitué par quatre galets coniques 63 à 66, dont trois seulement 63, 64 et 65 sont visibles sur les figures, montés, sur roulement à rouleaux coniques 67 sur un chariot 68. Le chariot 68 comprend un arbre 69 monté oscillant autour de l'axe de symétrie 23 de l'ensemble de l'organe d'entraînement, par l'intermédiaire d'un palier à aiguille 70 et d'un roulement crapaudine 71 dans un trou 72 ménagé dans le bras 11. L'ensemble est maintenu par une cale 73 et un circlip 74. Dans cet exemple, le moyen de guidage du disque méridien est constitué, non plus par une gorge mais par une collerette 75 circulaire, périphérique dont la section est un trapèze isocèle. La petite base de cette section étant située la plus loin par rapport à l'axe polaire. Les rouleaux coniques 63 à 66 ont évidemment la même pente et ils enserrent deux à deux: 63 et 64 d'une part 65 et 66 d'autre part ladite collerette 75.

Les axes 76 et 77 de deux galets coniques situés d'un même côté par rapport à la collerette convergent sur un axe passant par le point concourant des axes de symétrie de tous les organes d'entraînement (centre 27 de la rotule) et perpendiculaire à l'axe polaire 29 et à l'axe de symétrie 23 de l'organe d'entraînement.

Avec un tel système, on peut facilement, grâce à la cale 73, qui peut être d'épaisseur variable, réaliser une précharge des rouleaux coniques 63 à 66 contre les flancs de la collerette 75 évitant ainsi les vibrations des rouleaux sur les flancs de la piste.

On voit sur la figure 26 que l'angle δ entre chaque axe 76 ou 77 des rouleaux et l'axe de symétrie 23 de l'ensemble de l'organe d'entraînement pivotant est supérieur à l'angle γ définit plus haut (voir fig.11).

Cela est en effet nécessaire pour que la rotule soit bien maintenue entre ses deux tulipes, par chacune d'entre elles, de telle façon que son centre coincide bien avec le point concourant des axes de symétrie des trois organes d'entrainement de la tulipe 1 et avec le point concourant des axes de symétrie des trois organes d'entraînement de la tulipe 2.

L'angle γ doit donc être aussi faible que possible, juste ce qu,il faut pour garantir le maintien de la rotule lors de la position d'alignement des arbres. Quelques degrés suffisent.

La figure 23 montre un moyen utilisé pour maintenir la rotule immobile lors d'un fonctionnement où les arbres peuvent être à un moment ou à un autre en position alignée et dans le cas, bien entendu, où γ = c'est-à-dire que α = β = 90°.

En effet, dans ce cas, en position alignée des arbres, l'axe polaire de la rotule peut s'orienter librement autour de son centre 27, or si cet axe polaire se met en désalignement par rapport aux axes alignés des arbres, le dispositif est bloqué et la ligne d'arbre ne peut plus s'infléchir.

La figure 23 montre donc un organe d'entraînement 17 qui comporte un système à bille rétractable inséré dans un alésage pratiqué dans l'axe de symétrie 23 de l'organe d'entraînement face au fond de gorge 78, du disque méridien 32: Une bille 79 est logée dans une cartouche de guidage 80 et poussée par un piston 81 comportant un patin de frottement 82 et activé par un ressort 83 qui prend appui sur le fond 84 de sa cartouche de telle sorte que la bille est constamment contrainte en fond de gorge 78 du disque méridien (dans le plan médian de la gorge). Lors du maintien en position neutre du dispositif (alignement des arbres) alors que la rotule peut positionner librement son axe polaire 29, il suffit pour fixer cet axe de prévoir une empreinte 85 pratiquée en fond de gorge 78 dans le plan perpendiculaire à l'axe polaire.

Un tel dispositif doit être prévu pour au moins deux organes d'entraînement non associés au même disque méridien.

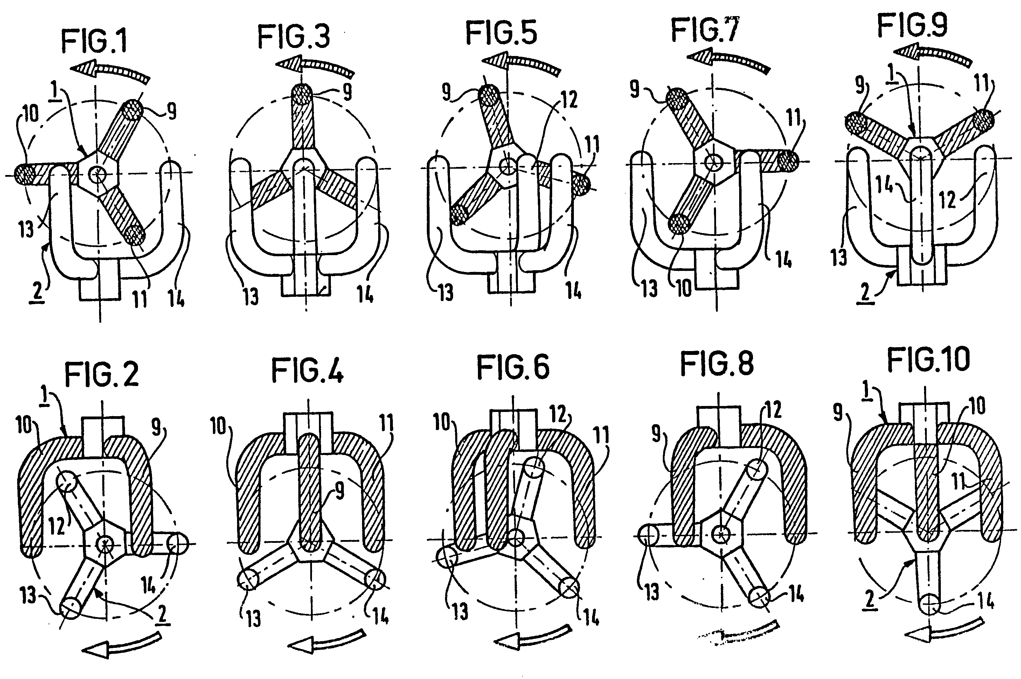

Les figures 1 à 10 permettent de suivre l'évolution respective des bras des tulipes au cours de la rotation des arbres, ceux-ci étant à 90° l'un de l'autre.

Sur ces figures, on a référencé les bras.

Les figures 1 et 2 étant le point de départ, représentées selon deux projections orthogonales, les figures 3 et 4 procèdent des deux précédentes par une rotation de 30° les figures 5 et 6 procèdent des figures 3 et 4 par une rotation de 15°, les figures 7 et 8 procèdent des figures 5 et 6 par une rotation de 15° et les figures 9 et 10 procèdent des figures 7 et 8 par une rotation de 30° soit 90° entre respectivement les figures 1 et 2 et les figures 9 et 10.

Une nouvelle rotation de 30° nous ramène à la position de la figure 1 mais dans laquelle on aurait permuté les références des bras de telle sorte que le bras indiqué 13 devienne 14 et ainsi de suite. Un tour complet est ainsi réalisé en observant successivement trois fois et dans l'ordre ces figures et en revenant une dernière fois aux figures 1 et 2.

Ces épures permettent de vérifier les seuils d'interférence entre les bras des tulipes compte tenu de la nécessité technologique de réserver des volumes de matière suffisante en rapport avec les efforts envisagés. On constate que la position la plus critique est celle correspondant aux figures 5, 6. Par contre les figures 3 et 4 d'une part et 9 et 10 d'autre part représentent deux configurations symétriques et particulières en ce que les tulipes présentent chacune un bras d'entraînement dans le plan d'inclinaison des arbres et qu'elles permettent une inclinaison supplémentaire d'environ 20°, particularité qui peut, par exemple, être utilisée pour le montage des organes du dispositif. Dans ces configurations, la rotule a ses disques respectivement placés comme on le voit sur la figure 13 et correspond à la position des figures 20 et 21 pour lesquelles l'écart angulaire est de 60°.

Le démontage peut se faire par exemple de la façon suivante en partant de la figure 20 et après avoir ôté les circlips 33 et 34: on incline au maximum les tulipes 1 et 2 c'est-à-dire jusqu'à ce que les tétons 17 et 19 viennent porter sur le moyeu 44 du disque méridien 30. Dans cette position, le disque méridien 32 peut se dégager aisément de son tourillon 39 car il n'est plus tenu par ses tétons d'entraînement et aucun bras de la tulipe 2 ne fait obstacle. Une fois le disque 32 ôté, le dispositif n'est plus stable, cependant, pour dégager le disque méridien 30, il faut opérer comme précédemment, dans la configuration de la figure 21 vis-à-vis des organes d'entraînement 15 et 18 qui sont engagés dans la gorge 53 du disque 30; une fois enlevé le disque 30, il n'y a plus aucune difficulté pour dégager les organes d'entraînement 16 et 20 de la gorge 54 du disque 31.

Pour le remontage, on remonte d'abord le disque 31, sur un organe d'entraînement quelconque de la tulipe 1 et sur un organe d'entraînement quelconque de la tulipe 2 ; on continue ensuite en sens inverse des opérations de démontage.

Enfin, la figure 22 montre le dispositif associé avec un système de paliers à fourches articulés qui permet en particulier de soulager le dispositif des surcharges axiales éventuelles trop fortes. Il comprend deux paliers 86 et 87 à deux fourches chacune 88 et 89 pour le palier 86 et 90 et 91 pour le palier 87. Ces paliers enveloppent en partie le dispositif: on voit en effet en 92, pour le palier 86, le bord extrême de l'enveloppe en arrière plan de la figure qui vient se raccorder sur les fourches 88 et 89. Il en est de même pour le palier 87.

Ces deux paliers sont montés face à face et sont solidarisés selon un axe charnière 93 par leurs fourches 88 et 90 d'une part et 89, 91 d'autre part, au moyen de broches 94 et 95.

Bien entendu, l'axe d'articulation 93 passe par le point de concours des axes de symétrie des six organes d'entraînement, c'est-à, dire par le centre 27 de la rotule.

Le palier 86 est monté, par son moyeu 96, sur le moyeu 97 de la première tulipe 1. Une cale d'épaisseur 98 est interposée entre les épaulements respectifs de la tulipe et du palier, ce qui permet de faire passer d'une manière précise l'axe d'articulation 93 des paliers par le centre 27 de la rotule 3. De même, le palier 87 est monté, par son moyeu 99, sur le moyeu 100 de la deuxième tulipe 2, et une cale d'épaisseur 101 est interposée entre les épaulements respectifs de la tulipe et du palier pour la même raison. La liaison axiale du palier 86 s'effectue par une contre-butée 102 montée à buter contre la partie arrière du moyeu 96 du palier 86 et assujettie sur le moyeu 97 de la première tulipe 1 par une goupille 103 qui traverse également l'arbre 4.

De même, la liaison axiale du palier 87 s'effectue par une contrebutée 104 montée à buter contre la partie arrière du moyeu 99 du palier 87 et assujettie sur le moyeu 100 de la deuxième tulipe 2 par une goupille 105 qui traverse également l'arbre 5.

Le dispositif est alors libre de tourner dans chacun des paliers quelle que soit l'inclinaison de la ligne d'arbres, et les sollicitations axiales d'arbre de transmission à arbre de transmission passent ainsi par les paliers à fourches.

Des écrous moletés 106 et 107 installes à demeure sur les extrémités filetées 108 et 109 des broches 94 et 95 permettent le blocage des paliers à fourches dans une inclinaison déterminée des arbres.

De même que les organes d'entraînement peuvent être constitués et montés, comme on l'a décrit en se référant aux figures 24 et 26, ce qui permet de n'avoir que des mouvements relatifs de roulement sans frottement entre les éléments, on peut aussi, dans ce même but, munir les trous 46 et 47 des moyeux 44 et 45 des disques méridiens 30 et 32 de roulements axiaux et radiaux à l'endroit des tourillons 38 et 39 du disque méridien central 31. On a alors un dispositif qui est apte à un très bon rendement et qui peut tourner à grande vitesse.

**Revendications**

1. Dispositif d'accouplement homocinétique entre un premier arbre, (4) et un deuxième arbre (5) rotatifs, du type joint tripode à point unique (27) d'inflexion, comprenant un élément de transmission (3) constitué par un assemblage de trois organes oscillants (30, 31, 32) articulés autour d'un axe commun (29), une première tulipe d'entraînement (1) solidaire de l'extrémité du premier arbre (4), une deuxième tulipe d'entraînement (2) solidaire de l'extrémité du deuxième arbre (5), chaque tulipe (1, 2) d'entraînement étant munie de trois organes d'entraînement (15 à 20) possédant chacun un axe de symétrie (21 à 26) fixe par rapport à sa tulipe d'entraînement, l'axe de symetrie (21 à 26) des six organes d'entraînement (15 à 20) étant concourant sur ledit axe commun (29) des trois organes oscillants (30, 31, 32), les axes de symétrie (21 à 23) des organes d'entraînement (15, 16, 17) de la première tulipe (1) faisant un angle β avec l'axe (7) du premier arbre (4) et les axes de symétrie (24 à 26) des organes d'entraînement de la deuxième tulipe (2) faisant un angle α avec l'axe (8) du deuxième arbre (5), les traces desdits axes de symétrie (21 à 26) des organes d'entraînement (15 à 20) d'une tulipe (1 ou 2) sur un plan perpendiculaire à l'axe de l'arbre (4, 5) lie à ladite tulipe (1, 2) formant les sommets d'un triangle sensiblement équilatéral, chacun des trois orages oscillants (30, 31, 32) comportant des moyens de guidage (53, 54, 55, 75) coopérant avec un couple d'organes d'entraînement (15, 18; 16, 20; 17, 19) dont l'un (15, 16, 17) appartient à la premiere tulipe (1) et l'autre (18, 20, 19) à la deuxième tulipe (2) de manière à, d'une part interdire la désolidarisation d'une tulipe par rapport audit élément de transmission (3) et d'autre part à permettre à chaque organe d'entraînement de se déplacer, par rapport à l'organe oscillant avec lequel il coopère, sur une portion de trajectoire circulaire dont le plan médian contient ledit axe commun (29) et ledit axe de symétrie (21 à 26) dudit organe d'entraînement considéré et dont le centre (27) est confondu avec ledit point concourant desdits axes de symétrie des organes d'entraînement, caractérisé en ce que, pour chaque dit organe oscillant (30, 31, 32), lesdits moyens de guidage sur une portion de trajectoire circulaire des organes d'entraînement existent, au moins sur une certaine étendue, de part et d'autre dudit axe commun d'articulation (29), en ce que chaque couple d'organes d'entraînement qui coopère avec son organe oscillant propre est situé de telle façon que les deux organes d'entraînement qui le composent sont situés de part et d'autre dudit axe commun d'articulation, en ce que chaque tulipe (1, 2) comporte trois bras d'entraînement (9 à 14) permettant aux deux tulipes de s'interpénétrer sans interférence au cours de la rotation des arbres même lorsque les axes des arbres forment un angle, un dit organe d'entraînement étant placé au voisinage de l'extrémité de chaque bras, et en ce que, lesdits angles α et β sont supplémentaires.

2. Dispositif selon la revendication 1, caractérisé en ce que l'angle α = l'angle β = 90°.

3. Dispositif selon la revendication 1, caractérisé en ce que les angles α et β sont différents.

4. Dispositif selon la revendication 3, caractérisé en ce que la valeur absolue de la demi différence entre les angles α et β est égale à γ, γ étant de l'ordre de quelques degrés.

5. Dispositif selon l'une des revendications 2 ou 3, caractérisé en ce que ladite étendue des moyens de guidage est, pour chaque organe oscillant, d'au moins 100° de chaque côté dudit axe commun.

6. Dispositif selon l'une des revendications 2 ou 3, caractérisé en ce que lesdits organes d'entraînement sont constitués par des tétons sphériques (15 à 20) et en ce que lesdits moyens de guidage desdits organes comportent pour chaque organe oscillant, une gorge périphérique circulaire (53 à 55) dont la section est circulaire et non fermée, l'ouverture étant inférieure à 180°.

7. Dispositif selon la revendication 6, caractérisé en ce que chaque téton sphérique est monté à l'extrémité d'un dit bras de façon à pouvoir pivoter autour dudit axe de symétrie (21 à 26).

8. Dispositif selon l'une des revendications 2 ou 3, caractérisé en ce que pour chaque organe oscillant lesdits moyens de guidage sont constitués par une collerette circulaire périphérique (75) dont la section est un trapèze isocèle à petite base la plus éloignée dudit axe commun d'articulation (29) et en ce que chaque organe d'entraînement comporte un chariot (68) à quatre galets coniques (63 à 66) enserrant deux à deux ladite collerette, les axes (76, 77) des deux galets (63, 65) situés d'un même côté de la collerette convergeant sur un axe passant par ledit point concourant (27) desdits axes de symétrie et perpendiculaire audit axe commun (29) et audit axe de symétrie de l'organe d'entraînement considéré, ledit chariot (68) étant monté, à l'extrémité d'un dit bras (9 à 14) de façon à pouvoir pivoter autour dudit axe de symétrie (21 à 26).

9. Dispositif selon la revendication 2, caractérisé en ce que des moyens sont prévus de manière à ce qu'en position alignée des arbres, l'axe commun d'articulation (29) soit maintenu dans l'alignement desdits arbres.

10. Dispositif selon la revendication 9, caractérisé en ce que lesdits moyens comprennent, pour au moins deux organes d'entraînement non associés au même organe oscillant, un système (80 à 84) à bille (79) rétractable insérée dans un alésage dudit organe, ladite bille roulant sur lesdits moyens de guidage de l'organe oscillant considéré, dans ledit plan médian de ladite trajectoire, qui comporte une empreinte (85) à leur intersection avec le plan perpendiculaire audit axe commun d'articulation passant par ledit point concourant.

11. Dispositif selon l'une des revendications 2 ou 3, caractérisé en ce que le diamètre moyen des trajectoires des organes d'entraînement est le même pour les trois organes oscillants.

12. Dispositif selon l'une des revendications 2 ou 3, caractérisé en ce qu'il comporte en outre un système articulé de deux paliers (86, 87) à fourches (88 à 91) dans chacun desquels est intégré coaxialement l'une des tulipes de telle sorte que l'axe d'articulation (93) dudit système passe par ledit point de concours (27) desdits axes de symétrie desdits organes d'entraînement, chacun desdits paliers à fourches comportant un moyeu (96, 99) maintenu prisonnier axialement entre une contre-butée (102, 104) et un épaulement solidaires de leur tulipe respective, ledit dispositif pouvant tourner librement dans ledit système de paliers à fourches.

13. Dispositif selon la revendication 12, caractérisé en ce que ledit système articulé de deux paliers à fourches comporte des moyens (106, 107) de verrouillage de la position angulaire respective des axes de leur moyeu.

**Patentansprüche**

1. Homokinetische Kupplungsvorrichtung zwischen einer ersten und einer zweiten drehbaren Welle (4, 5) vom Dreifuß-Verbindungstyp mit nur einem einzigen Knickpunkt (27), wobei die Vorrichtung ein aus drei schwingenden Organen (30, 31, 32), die um eine gemeinsame Achse (29) gelenkig gelagert sind, bestehendes Übertragungselement (3), ein erstes tulpenförmiges Antriebsglied (1), das am Ende der ersten Welle (4) befestigt ist, und ein zweites tulpenförmiges Antriebsglied (2) aufweist, das am Ende der zweiten Welle (5) befestigt ist, wobei jedes tulpenförmige Antriebsglied (1, 2) mit drei Antriebsorganen (15 bis 20) versehen ist, die je eine bezüglich des eigenen Antriebsglieds feste Symmetrieachse (21 bis 26) besitzen, wobei die Symmetrieachsen (21 bis 26) der sechs Antriebsorgane (15 bis 20) sich auf der gemeinsamen Achse (29) der drei schwingenden Organe (30, 31, 32) schneiden, wobei die Symmetrieachsen (21 bis 23) der Antriebsorgane (15, 16, 17) des ersten tulpenförmigen Antriebsglieds (1) einen Winkel β mit der Achse (7) der ersten Welle (4) und die Symmetrieachsen (24 bis 26) der Antriebsorgane des zweiten tulpenförmigen Antriebsglieds (2) einen Winkel α mit der Achse (8) der zweiten Welle (5) einschließen, wobei die Projektionen dieser Symmetrieachsen (21 bis 26) der Antriebsorgane (15 bis 20) eines tulpenförmigen Antriebsglieds (1 oder 2) auf eine zur Achse der mit diesem Antriebsglied (1, 2) verbundenen Welle (4, 5) senkrechten Ebene die Spitzen eines im wesentlichen gleichseitigen Dreiecks bilden, wobei jedes der drei schwingenden Organe (30, 31, 32) Führungsmittel (53, 54, 55, 75) aufweisen, die mit einem Paar von Antriebsorganen (15, 18; 16, 20; 17, 19) zusammenwirken, von denen je ein Organ (15, 16, 17) dem ersten Antriebsglied (1) und das andere (18, 20, 19) dem zweiten Antriebsglied (2) angehört, so daß einerseits ein Lösen eines Antriebsglieds bezüglich des Obertragungselements (3) unmöglich wird und andererseits jedes Antriebsorgan sich bezüglich des schwingenden Organs, mit dem es zusammenwirkt, über einen Teil des kreisförmigen Wegs verschieben kann, dessen Mittelebene die gemeinsame Achse (29) und die Symmetrieachse (21 bis 26) des betrachteten Antriebsorgans enthält und dessen Zentrum (27) mit dem Schnittpunkt der Symmetrieachsen der Antriebsorgane zusammenfällt, dadurch gekennzeichnet, daß für jedes schwingende Organ (30, 31, 32) die Führungsmittel auf einem Teil des kreisförmigen Wegs der Antriebsorgane mindestens über eine gewisse Strecke hinweg zu beiden Seiten der gemeinsamen Gelenkachse (29) existieren und daß jedes Paar von Antriebsorganen, das mit seinem eigenen schwingenden Organ zusammenwirkt, so angeordnet ist, daß die beiden dieses Paar bildenden Antriebsorgane zu beiden Seiten der gemeinsamen Gelenkachse liegen, daß jedes tulpenförmige Antriebsglied (1, 2) drei Antriebsarme (9 bis 14) enthält, die es ermöglichen, daß sich die beiden Antriebsorgane ohne Interferenz während der Drehung der Wellen ineinanderschieben, selbst wenn die Achsen der Wellen einen Winkel einschließen, wobei eines der Antriebsorgane in der Nähe des Endes jedes Arms liegt, und daß die beiden Winkel α und β Ergänzungswinke sind.

2. Vorrichtung nach Anspruch 1, dadurch gekennzeichnet, daß der Winkel α und der Winkel β je 90° betragen.

3. Vorrichtung nach Anspruch 1, dadurch gekennzeichnet, daß die Winkel α und β unterschiedlich sind.

4. Vorrichtung nach Anspruch 3, dadurch gekennzeichnet, daß der Absolutwert der halben Differenz zwischen den Winkeln α und β gleich γ ist und γ in der Größenordnung von einigen Graden liegt.

5. Vorrichtung nach einem der Ansprüche 2 oder 3, dadurch gekennzeichnet, daß sich die Führungsmittel für jedes schwingende Organ über mindestens 100° auf jeder Seite der gemeinsamen Achse erstrecken.

6. Vorrichtung nach einem der Ansprüche 2 oder 3, dadurch gekennzeichnet, daß die Antriebsorgane von kugelförmigen Vorsprüngen (15 bis 20) gebildet werden und daß die Führungsmittel der Organe für jedes schwingende Organ eine periphere kreisförmige Nut (53 bis 55) enthalten, deren Querschnitt kreisförmig und nicht geschlossen ist, wobei die Öffnung geringer als 180° ist.

7. Vorrichtung nach Anspruch 6, dadurch gekennzeichnet, daß jeder kugelförmige Vorsprung am Ende eines der Arme montiert ist, so daß er um die Symmetrieachse (21 bis 26) schwenken kann.

8. Vorrichtung nach einem der Ansprüche 2 oder 3, dadurch gekennzeichnet, daß für jedes schwingende Organ die Führungsmittel aus einem peripheren kreisförmigen Kragen (75) bestehen, dessen Querschnitt ein gleichschenkliges Trapez ist, dessen kleine Basis von der gemeinsamen Schwenkachse (29) am weitesten entfernt ist, und daß jedes Antriebsorgan einen Wagen (68) mit vier konischen Rollen (63 bis 66) aufweist, die paarweise den Kragen einklemmen, wobei die Achsen (76, 77) der beiden Rollen (63, 65), die auf einer Seite des Kragens liegen, auf eine Achse konvergieren, die durch den Schnittpunkt (27) der Symmetrieachsen verläuft und senkrecht zur gemeinsamen Achse (29) und zur Symmetrieachse des betrachteten Antriebsorgans liegt, wobei der Wagen (68) am Ende eines der Arme (9 bis 14) montiert ist, so daß er um die Symmetrieachse (21 bis 26) schwenken kann.

9. Vorrichtung nach Anspruch 2, dadurch gekennzeichnet, daß Mittel vorgesehen sind, die bewirken, daß die gemeinsame Schwenkachse (29) in Flucht zu den Wellen gehalten wird, wenn diese fluchten.

10. Vorrichtung nach Anspruch 9, dadurch gekennzeichnet, daß die Mittel für mindestens zwei nicht demselben schwingenden Organ zugeordnete Antriebsorgane ein System (80 bis 84) mit zurückziehbarer Kugel (79) aufweist, die in einen Hohlraum des Organs eingefügt ist und auf den Führungsmitteln des betrachteten schwingenden Organs in der mittleren Ebene des genannten Wegs abrollt, welcher eine Vertiefung (85) im Schnittpunkt mit der zur gemeinsamen Schwenkachse senkrechten und durch den Schnittpunkt verlaufenden Ebene besitzt.

11. Vorrichtung nach einem der Ansprüche 2 oder 3, dadurch gekennzeichnet, daß der mittlere Durchmesser der Wege der Antriebsorgane für alle drei schwingenden Organe derselbe ist.

12. Vorrichtung nach einem der Ansprüche 2 oder 3, dadurch gekennzeichnet, daß sie außerdem ein Gelenksystem mit zwei Lagern (86, 87) und Gabeln (88 bis 91) aufweist, wobei in jedes der Systeme koaxial eines der tulpenförmigen Antriebsglieder derartig integriert ist, daß die Schwenkachse (93) des Systems durch den Schnittpunkt (27) der Symmetrieachsen der Antriebsorgane verläuft, wobei jedes der Lager mit Gabel eine Nabe (96, 99) besitzt, die axial zwischen einem Gegenanschlag (102, 104) und einer mit dem entsprechenden tulpenförmigen Antriebsglied fest verbundenen Schulter eingeschlossen ist, während die Vorrichtung frei in dem Lagersystem mit Gabeln drehen kann.

13. Vorrichtung nach Anspruch 12, dadurch gekennzeichnet, daß das Gelenksystem mit zwei Gabellagern Mittel (106, 107) zur Blockierung der jeweiligen Winkelposition der Achsen ihrer Nabe besitzt.

## Claims

1. A constant-velocity universal coupling between a first rotary shaft (4) and a second rotary shaft (5), the coupling being of the tripod joint type having a single bending point (27), and comprising: a transmission unit (3) constituted by an assembly of three oscillating members (30, 31, 32) hinged about a common axis (29); a first drive tulip (1) fixed to the end of the first shaft (4); and a second drive tulip (2) fixed to the end of the second shaft (5); each drive tulip (1,2) being fitted with three drive members (15 to 20) each having an axis of symmetry (21 to 26) which is fixed relative to its drive tulip, the axes of symmetry (21 to 26) of the six drive members (15 to 20) meeting on the said common axis (29) of the three oscillating members (30, 31, 32), the axes of symmetry (21 to 23) of the drive members (15, 16, 17) of the first tulip (1) making an angle $\beta$ with the axis (7) of the first shaft, and the axes of symmetry (24 to 26) of the drive members of the second tulip (2) making an angle $\alpha$ with the axis (8) of the second shaft (5), the projections of the said axes of symmetry (21 to 26) of the drive members (15 to 20) of each tulip (1 or 2) on a plane perpendicular to the axis of the shaft (4, 5) connected to that tulip forming the vertices of a substantially equilateral triangle, each of the three oscillating members (30, 31, 32) including guide means (53, 54, 55, 75) cooperating with a pair of drive members (15, 18; 16, 20; 17, 19), one of which (15, 16, 17) belongs to the first tulip (1) and the other of which (18, 20, 19) belongs to the second tulip (2), in such a manner as firstly to prevent a tulip from becoming detached from the said transmission unit (3), and secondly to enable each drive member to move relative to the oscillating member with which it is co-operating over a portion of a circular path whose median plane contains the said common axis (29) and the said axis of symmetry (21 to 26) of the said drive member under consideration and whose center (27) is located at the said point at which the drive member axes of symmetry meet; the coupling being characterized in that, for each of said oscillating members (30, 31, 32), the said guide means over a portion of a circular path of the drive members exist, at least to a certain extent, on either side of the common hinge axis (29), in that each pair of drive members cooperating with the corresponding oscillating member is situated in such a manner that the two drive members of the pair are situated on either side of the said common hinge axis, in that each tulip (1, 2) includes three drive arms (9 to 14) enabling the two tulips to interpenetrate without interference during rotation of the shafts even when the axes of the shafts are at an angle, one of said drive members being placed close to the end of each arm, and in that the said angles $\alpha$ and $\beta$ are supplementary angles.

2. A coupling according to claim 1, characterized in that the angle $\alpha=$ the angle $\beta = 90°$.

3. A coupling according to claim 1, characterized in that the angles $\alpha$ and $\beta$ are different.

4. A coupling according to claim 3, characterized in that the absolute value of half the difference between the angles $\alpha$ and $\beta$ is $\gamma$, with $\gamma$ being a few degrees.

5. A coupling according to claim 2 or 3, characterized in that the said extent of the guide means for each oscillating member is at least 100° on either side of the said common axis.

6. A coupling according to claim 2 or 3, characterized in that the said drive members are constituted by spherical pegs (15 to 20) and in that the said guide means of the said members include a peripheral circular groove (53 to 55) for each oscillating member, the groove being of non-closed circular section, with an opening of less than 180°.

7. A coupling according to claim 6, characterized in that each spherical peg is mounted at the end of one of said arms is such a manner as to be able to pivot about the said axis of symmetry (21 to 26).

8. A coupling according to claim 2 or 3, characterized in that the said guide means for each oscillating member are constituted by a peripheral circular collar (75) having a cross section in the form of an isosceles trapezium with its small base furthest away from the said common hinge axis (29), and in that each drive member includes a carriage (68) having four conical wheels (63 to 66) clamping the collar in pairs, the axes (76, 77) of the two wheels (63, 65) situated on the same side of the collar converging on an axis passing through the said meeting point (27) of the axes of symmetry and perpendicular to the said common axis (29) and to the axis of symmetry of the drive member under consideration, the carriage (68) being mounted, at the end of one of said arms (9 to 14), in such a manner as to be able to pivot about the said axis of symmetry (21 to 26).

9. A coupling according to claim 2, characterized in that means are provided such that when the shafts are in alignment, the common hinge axis (29) is kept in alignment with the said shafts.

10. A coupling according to claim 9, characterized in that the said means include, for at least two drive members not associated with the same oscillating member, a system (80 to 84) having retractable balls (79) inserted in a bore in the said member, the said ball rolling over the said guide means of the oscillating member under consideration in the said median plane of the said path, which includes a recess (85) where they intersect the plane perpendicular to the said common hinge axis passing through the said meeting point.

11. A coupling according to claim 2 or 3, characterized in that the average diameter of the paths of the drive members is the same for all three oscillating members.

12. A coupling according to claim 2 or 3, characterized in that it further includes a hinge system with two fork (88 to 91) bearings (86, 87) each of which is coaxial with and contains one of the tulips in such a manner that the hinge axis (93) of the said system passes through the meeting point (27) of the axes of symmetry of the said drive members, each of the said fork bearings including a hub (96, 99) which is axially held captive between a stop (102, 104) and a shoulder fixed to the corresponding tulip, the said coupling being free to rotate inside the said system of fork bearings.

13. A coupling according to claim 12, characterized in that the said hinge system with two fork bearings includes locking means (106, 107) for locking the respective angular positions of the axes of their hubs.

FIG.1

FIG.3

FIG.5

FIG.7

FIG.9

FIG.2

FIG.4

FIG.6

FIG.8

FIG.10

0 142 403

FIG.11

# FIG.12

# FIG.13

# FIG.14

# FIG.16

# FIG.18

# FIG.15

# FIG.17

# FIG.19

0 142 403

# FIG.20

0 142 403

FIG.21

FIG.22

# FIG.23

# FIG.24

# FIG.25

# FIG.26